# EUROPEAN PATENT SPECIFICATION

(11) **EP 2 849 370 B1**
(45) Date of publication and mention of the grant of the patent: **08.11.2017**
(21) Application number: 13004472.0
(22) Date of filing: 13.09.2013
(51) Int. Cl.: H04J 14/02, H04B 10/077

(54) **Method for an enhanced failure localization in an optical data transmission network, optical data transmission network and program product**
Verfahren für eine verbesserte Fehlerlokalisierung in einem optischen Datenübertragungsnetz, optisches Datenübertragungsnetz und Programmprodukt
Procédé de localisation de défaillance améliorée dans un réseau de transmission de données optiques, réseau de transmission de données optiques et produit de programme informatique

(43) Date of publication of application: 18.03.2015
(73) Proprietor: Deutsche Telekom AG, 53113 Bonn (DE)
(72) Inventor: Schatzmayr, Rainer, 53229 Bonn (DE)
(74) Representative: Schwöbel, Thilo K.

(56) References cited:
- US-A- 6 078 596
- US-A1- 2002 110 155
- US-B1- 6 822 972

## Description

### BACKGROUND

The present invention relates a method for an enhanced failure localization in an optical data transmission network, wherein the optical data transmission network comprises at least a first router node and a second router node, wherein the optical data transmission network further comprises at least one optical data transmission line connecting the first router node with the second router node providing optical data transmission using a wavelength division multiplex (WDM) scheme or a dense wavelength division multiplex (DWDM) scheme, wherein the optical data transmission network comprises a multitude of amplifier nodes arranged in series along the optical data transmission line between the first router node and the second router node.

The present invention further relates to an optical data transmission network, adapted for an enhanced failure localization within the optical data transmission network, wherein the optical data transmission network comprises at least a first router node and a second router node, wherein the optical data transmission network further comprises at least one optical data transmission line connecting the first router node with the second router node providing optical data transmission using a wavelength division multiplex (WDM) scheme or a dense wavelength division multiplex (DWDM) scheme, wherein the optical data transmission network comprises a multitude of amplifier nodes arranged in series along the optical data transmission line between the first router node and the second router node.

Advanced telecommunications networks that are able to deliver always higher bandwidths to fixed and/or mobile subscribers require access networks, aggregation networks and core networks that have increased bandwidths. Such increased bandwidth needs can be handled by optical transport networks or optical data transmission networks, especially those using a wavelength division multiplex (WDM) scheme or a dense wavelength division multiplex (DWDM) scheme.

However, in optical data transmission networks, a number of possible error sources or failure sources exist. Along an optical fiber path, two main types of errors typically occur: an optical fiber cut, or a failure of the equipment connected to the optical fiber.

In presently known optical data transmission networks, it is not easily and quickly detectable which type of error or failure (especially either a fiber cut or a failure of the equipment connected to the optical fiber) is the source of a failure of a given optical data transmission line (the optical data transmission line comprising either only one optical fiber or a plurality of optical fibers). In US 6 078 596 a network is disclosed in which one network node sends out a line trace byte in a message from one network router node to another. the receiving node sends an acknowledge signal back. An alert is generated if the acknowledgement is not received. This locates a fault to be between two nodes.

### SUMMARY

An object of the present invention is to provide a technically simple, quick and especially cost effective solution for an enhanced failure localization in such an optical data transmission network, such that it can be derived in a simple and easy manner whether the failure of the optical data transmission line is due to a break of the optical data transmission line or due to a failure of an amplifier node along the optical data transmission line, and where (along the optical data transmission line) the failure is located. A further object of the present invention is to provide an optical data transmission network that allows for a cost effective and comparably simple solution for enabling the detection where along the optical data transmission line the failure is located and whether the failure of the optical data transmission line is due to a break of the optical data transmission line or due to a failure of an amplifier node along the optical data transmission line.

The object of the present invention is achieved by a method for an enhanced failure localization in an optical data transmission network, wherein the optical data transmission network comprises at least a first router node and a second router node, wherein the optical data transmission network further comprises at least one optical data transmission line connecting the first router node with the second router node providing optical data transmission using a wavelength division multiplex (WDM) scheme or a dense wavelength division multiplex (DWDM) scheme, wherein the optical data transmission network comprises a multitude of amplifier nodes arranged in series along the optical data transmission line between the first router node and the second router node, wherein the optical data transmission network comprises at least one failure localization module, wherein the method comprises the following steps:
-- in a first step, at least in case of a failure of the optical data transmission line detected between the first router node and the second router node, first probing request messages are sent in the direction from the first router node to the multitude of amplifier nodes and second probing request messages are sent in the direction from the second router node to the multitude of amplifier nodes,
-- in a second step, subsequent to the first step, the first router node receives first probing acknowledgement messages from at least part of the multitude of amplifier nodes and the second router node receives second probing acknowledgement messages from at least part of the multitude of amplifier nodes,
-- in a third step, subsequent to the second step, the content of the first and second probing acknowledgement messages received is compared and it is concluded where along the optical data transmission line the failure is located and whether the failure of the optical data transmission line is due to a break of the optical data transmission line or due to a failure of an amplifier node along the optical data transmission line.

According to the present invention, the optical data transmission network comprises at least a first router node and a second router node, between the first and second router node an optical data transmission line, and furthermore a multitude of amplifier nodes arranged in series, i.e. one after the other, along the optical data transmission line between the first and second router node. Typically, the optical data transmission network comprises besides the first and second router node further router nodes, and besides the optical data transmission line (between the first and second router node) further optical data transmission lines and/or non-optical data transmission lines (such as, e.g., data transmission lines carrying electrical signals or even wireless data transmission lines) connecting the other router nodes (besides the first and second router nodes). Furthermore, it is typical for core networks or aggregation networks (comprising at least partially optical data transmission components or being at least in part optical data transmission networks) that router nodes of different levels exist, such as router nodes of a first (lower) level (hereinafter also called "R1" router nodes), and router nodes of a second (higher) level (hereinafter also called "R2" router nodes). However, in the context of the present invention, the (same or different) level of two router nodes that are connected by an optical data transmission line is not primarily relevant for the inventive functionality of the optical data transmission network or the functionality of the optical data transmission line with respect to the enhanced functionality regarding failure localization.

The optical data transmission network according to the present invention or used in accordance with the inventive method uses a wavelength division multiplex (WDM) scheme or a dense wavelength division multiplex (DWDM) scheme. This means that a multitude of different (optical) data transmission frequencies are used within the optical data transmission line, especially within a fiber of the optical data transmission line.

According to the present invention, the inventive optical data transmission network makes use of an integrated IP and optical Transport network. The optical layer is comparably simple, relying on IP technology to manage the transmission network. Thereby, it is advantageously possible to reduce the cost of operating the optical data transmission network, i.e. the optical layer. Advantageously, for example, the optical layer does not have optical tools in place to detect or measure the localization of failures. This is one of the major differences to the way conventional optical transport networks are built. In conventional optical data transmission networks (or optical transport networks), the failure detection mechanisms are built into the transmission layer. By contrast, the optical data transmission network according to the present invention (and/or used in accordance with the method of the present invention) relies on the routers or router nodes for performing such functions. However routers or router nodes are limited to layer 3 (IP Internet Protocol) capabilities (i.e. the network layer for tasks such as addressing, routing and the delivery of datagrams between points on a network), and are not able to perform all type of checks that traditional transmission layers do, especially on layer 1 and/or layer 2 (according to the abstraction layers of the OSI model (Open Systems Interconnection according to ISO/IEC 7498-1)).

It has already been mentioned that along an optical fiber path, two main types of errors can occur, namely an optical fiber cut or a failure of the equipment connected to the optical fiber. With IP (Internet Protocol) technology used by the router nodes of the inventive optical data transmission network, only the last active IP element or IP component of a data transmission path within the network can be checked with a probing test. This creates the problem to detect or to decide - in case of a failure of the optical data transmission line considered - what kind of failure has occurred: is the last IP element of a chain broken, or is the optical data transmission line (or the optical data transmission fiber) before that element broken.

According to the present invention, the network elements or network nodes (i.e. the IP elements (or IP nodes) of the optical data transmission network) of the path or chain, i.e. the optical data transmission line, are probed from both sides (i.e. from opposing sides of the considered optical data transmission line in different directions) by means of first and second probing request messages (the first probing request messages coming from the first router node (at one end of the considered optical data transmission line), and the second probing request messages coming from the second router node (at the (opposing) other end of the considered optical data transmission line). Within the probed network nodes, especially amplifier nodes along the optical data transmission line considered, the first and second probing request messages trigger the generation of first and/or second probing acknowledgement messages (i.e. answers to the probing request messages) sent towards the first/second router nodes (the first probing acknowledgement messages being directed typically to the first router node (at one end of the considered optical data transmission line), and the second probing acknowledgement messages being directed typically to the second router node (at the (opposing) other end of the considered optical data transmission line). It is preferred to use an out-of-band connection (i.e. a data transmission line) to be able to check the measurements or answers from both directions. By checking the results of both kinds of measurements (i.e. both directions within the optical data transmission line), it is possible to identify the location of the failure (along the optical data transmission line) and if the source of the failure is related to an optical fiber cut, or to a network element or network node that has failed to respond and can be considered broken. Thereafter, a failure recovery procedure can be started as soon as the nature of the failure is detected. In case of a fiber cut, additional (optical) measurements can be made to identify where the fiber cut has happened. A replacement procedure of a broken amplifier (or amplifier node) is started as soon as an amplifier failure (or amplifier node failure) has been detected.

According to the present invention, it is preferred that the second probing acknowledgement messages are transmitted to the failure localization module by means of using a data communication line connecting, at least indirectly, the second router node with the first router node such that the optical data transmission line is bypassed by the data communication line.

By means of such a data communication line (that bypasses the optical data transmission line), the probing acknowledgement messages or at least their content related to the location and/or cause of the failure can be centralized at one of the relevant router nodes (especially the first router node, i.e. the second probing acknowledgement messages can be transmitted from the second router node to the first router node), and the respective conclusions as to the location and/or cause of the optical line failure be drawn.

It is furthermore preferred according to the present invention that the first router node comprises the failure localization module, and wherein the first and/or second probing acknowledgement messages are received by the localization module.

Thereby, it is advantageously possible that an aggregation of all the probing acknowledgement messages related to the optical data transmission line are collected in the failure localization module.

According to the present invention, it is furthermore preferred that the first router node comprises the failure localization module, that the second router node comprises a further failure localization module, that the first probing acknowledgement messages are received by the failure localization module and that the second probing acknowledgement messages are received by the further failure localization module.

Thereby, it is advantageously possible that at least a pre-processing of the probing acknowledgement messages can be provided locally, i.e. at the router nodes to where the respective probing acknowledgement messages are directed.

Furthermore, it is preferred according to the present invention that - in a fourth step subsequent to the second step and preceding the third step - data transmission related to a failure of the optical data transmission line between the first router node and the second router node is conducted between the failure localization module and the further failure localization module using the data communication line connecting, at least indirectly, the second router node with the first router node.

Thereby, it is advantageously possible that the aggregation of the probing acknowledgement messages or at least an aggregation of their content can be centralized at the first router node (i.e. by the failure localization module) or at the second router node (i.e. by the further failure localization module).

Furthermore, it is preferred according to the present invention that the wavelength division multiplex scheme or dense wavelength division multiplex scheme used on the optical data transmission line makes use of a plurality of different optical data transmission frequencies, wherein at least one of these optical data transmission frequencies corresponds to a signaling channel of the optical data transmission line, wherein - between the first and/or second router nodes on the one hand and the amplifier nodes of the optical data transmission line on the other hand - the probing request messages and/or the probing acknowledgement messages are transmitted on the signaling channel of the optical data transmission line.

Additionally, it is preferred according to the present invention that - in order to compare the content of the first and second probing acknowledgement messages - dependent on the first probing acknowledgement messages, a first subset of the amplifier nodes of the optical data transmission line are reported to be operational and a second subset of the amplifier nodes of the optical data transmission line are reported not to be operational, and
dependent on the second probing acknowledgement messages, a third subset of the amplifier nodes of the optical data transmission line are reported to be operational and a fourth subset of the amplifier nodes of the optical data transmission line are reported not to be operational,
wherein a failure of the optical data transmission line due to a break of the optical data transmission line is detected in case that the first subset of the amplifier nodes corresponds to the fourth subset and the second subset of the amplifier nodes corresponds to the third subset,
wherein a failure of the optical data transmission line due to a failure of an amplifier node along the optical data transmission line is detected in case that at least one amplifier node both belongs to the second subset of amplifier nodes and to the fourth subset of amplifier nodes.

Thereby, it is advantageously possible according to the present invention that the location of a failure of the optical data transmission line and the cause of the failure (i.e. whether a line or fiber break has occurred or whether a network node, especially an amplifier node, is failed) can be easily detected.

Furthermore, it is preferred according to the present invention that the first probing request messages and the second probing request messages are sent repeatedly - also without any failure of the optical data transmission line detected between the first router node and the second router node.

Thereby, it is advantageously possible according to the present invention that the optical data transmission line is monitored continuously or quasi-continuously (i.e. at least once during a predetermined time interval of, e.g., 100 seconds or 80 seconds or 60 seconds or 40 seconds or 30 seconds or 20 seconds or 10 seconds or 5 seconds or 1 second or 500 Milliseconds or 250 Milliseconds or 100 Milliseconds).

Furthermore, the present invention relates to an optical data transmission network, adapted for an enhanced failure localization within the optical data transmission network, wherein the optical data transmission network comprises at least a first router node and a second router node, wherein the optical data transmission network further comprises at least one optical data transmission line connecting the first router node with the second router node providing optical data transmission using a wavelength division multiplex (WDM) scheme or a dense wavelength division multiplex (DWDM) scheme, wherein the optical data transmission network comprises a multitude of amplifier nodes arranged in series along the optical data transmission line between the first router node and the second router node, wherein the optical data transmission network comprises at least one failure localization module, wherein the optical data transmission network is configured such that - at least in case of a failure of the optical data transmission line detected between the first router node and the second router node - first probing request messages are sent in the direction from the first router node to the multitude of amplifier nodes and second probing request messages are sent in the direction from the second router node to the multitude of amplifier nodes, wherein the optical data transmission network is furthermore configured such that the first router node receives first probing acknowledgement messages from at least part of the multitude of amplifier nodes and the second router node receives second probing acknowledgement messages from at least part of the multitude of amplifier nodes, wherein the optical data transmission network is furthermore configured such that the content of the first and second probing acknowledgement messages received is compared and it is concluded where along the optical data transmission line the failure is located and whether the failure of the optical data transmission line is due to a break of the optical data transmission line or due to a failure of an amplifier node along the optical data transmission line.

All preferred embodiments as mentioned above with regard to the inventive method are also - mutatis mutandis - to be applied to the optical data transmission network.

Additionally, the present invention relates to a program comprising a computer readable program code which, when executed on two or more router nodes of an optical data transmission network, causes the router nodes of the optical data transmission network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an optical data transmission line as part of an inventive optical data communication network comprising a first router node and a second router node (and additionally also a router node located along the optical data transmission line).

Figures 2 and 3 schematically illustrate the aggregated result of probing acknowledgement messages received from the amplifier nodes located along the optical data transmission line for the situation of a fiber break (figure 2) and for the situation of a failure of an amplifier node (figure 3).

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

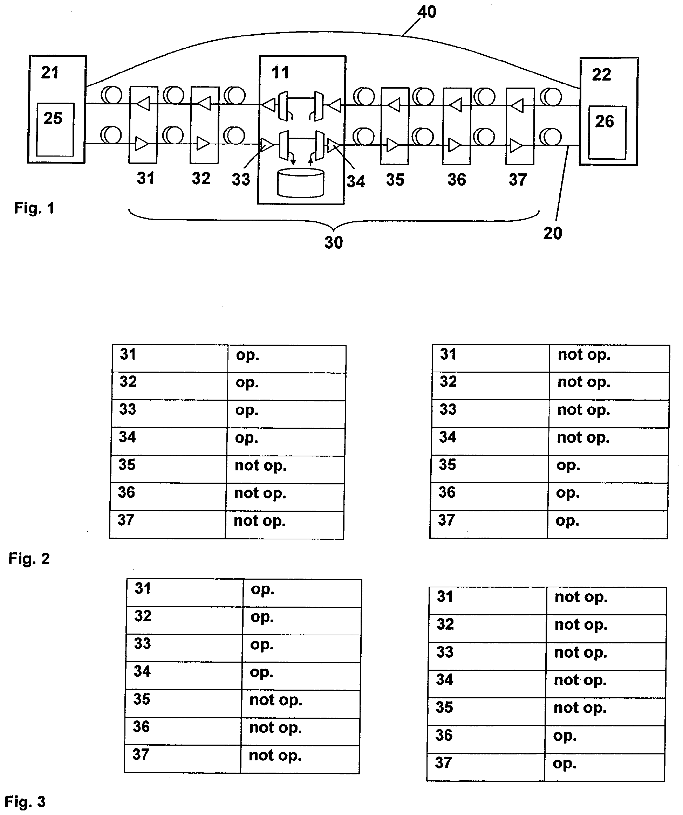

In Figure 1, an optical data transmission network comprising an optical data transmission line 20, a first router node 21 and a second router node 22 is schematically shown. Along the optical data transmission line 20, a multitude of amplifier nodes are located that are used to refresh the optical signal transmitted on the optical data transmission line 20. The multitude of amplifier nodes are hereinafter, as a whole, designated by reference sign 30. Specifically, according to a direction of the optical data transmission line 20 starting from the first router node 21, a first amplifier node 31 is located nearest to the first router node 21. Successively along the optical data transmission line 20 (in the direction away from the first router node 21), a second amplifier node 32 is located after the first amplifier node 31, a third amplifier node 33 is located after the second amplifier node 32, a fourth amplifier node 34 is located after the third amplifier node 33, , a fifth amplifier node 35 is located after the fourth amplifier node 34, , a sixth amplifier node 36 is located after the fifth amplifier node 35, and a seventh amplifier node 37 is located after the sixth amplifier node 36. The seventh amplifier node 37 is adjacent to the second router node 22.

In the example of a configuration of an optical data transmission network represented in Figure 1, a further router node 11 is located along the optical data transmission line 20 (i.e. between the first router node 21 and the second router node 22). The further router node 11 is located along the optical data transmission line 20 and comprises the third amplifier node 33 and the fourth amplifier node 34. The further router node 11 is, e.g., a router node of a different level within the network hierarchy of the optical data transmission network, for example the further router node 11 is of a higher level than the first and second router nodes 21, 22. However, with respect to the present invention, the presence of the further router node 11 between the first and second router nodes 21, 22, i.e. along the optical data transmission line 20, is not relevant for the inventive method for an enhanced failure localization; the third and fourth amplifier nodes 33, 34 act as if these amplifier nodes were ordinary amplifier nodes as the residual amplifier nodes of the multitude of amplifier nodes 30.

The optical data transmission network comprises at least one failure localization module 25. In the example represented in Figure 1, the failure localization module 25 is part of the first router node 21. However, according to a different architecture of the optical data transmission network (not shown in Figure 1), the failure localization module 25 could also be located at the second router node 22 or at the further router node 11 or at another location (not shown) within the optical data transmission network.

The optical data transmission network furthermore comprises a data communication line 40 connecting, at least indirectly, the second router node 22 with the first router node 21 such that the optical data transmission line 20 is bypassed by the data communication line 40.

According to the present invention, it is important to obtain an information where - along the optical data transmission line 20 - a failure is located and whether the failure of the optical data transmission line 20 is due to a break of the optical data transmission line 20 or due to a failure of an amplifier node 30. According to the inventive method, in a first step (at least in case of a failure of the optical data transmission line 20 detected between the first router node 21 and the second router node 22; but also in a continuous or quasi-continuous manner), first probing request messages are sent in the direction from the first router node 21 to the multitude of amplifier nodes 30 and second probing request messages are sent in the direction from the second router node 22 to the multitude of amplifier nodes 30. In a second step, subsequent to the first step, the first router node 21 receives first probing acknowledgement messages from at least part of the multitude of amplifier nodes 30 and the second router node 22 receives second probing acknowledgement messages from at least part of the multitude of amplifier nodes 30. From these responses, i.e. the (first and second) probing acknowledgement messages, it is possible to draw conclusions - in a third step subsequent to the second step - as to where along the optical data transmission line 20 the failure is located and whether the failure of the optical data transmission line 20 is due to a break of the optical data transmission line 20 or due to a failure of an amplifier node 30.

Preferably the following steps are conducted in view of a comparison of the probing acknowledgement messages received in the failure localization module 25:
-- dependent on the first probing acknowledgement messages, a first subset of the amplifier nodes 30 of the optical data transmission line 20 are reported to be operational and a second subset of the amplifier nodes 30 of the optical data transmission line 20 are reported not to be operational, and
-- dependent on the second probing acknowledgement messages, a third subset of the amplifier nodes 30 of the optical data transmission line 20 are reported to be operational and a fourth subset of the amplifier nodes 30 of the optical data transmission line 20 are reported not to be operational.

From this information it can be determined where (along the optical data transmission line 20) the failure occurred and whether the failure is due to a break of the optical data transmission line 20 or due to a failure of one of the amplifier nodes 30:
-- a failure due to a break of the optical data transmission line 20 is detected in case that the first subset of the amplifier nodes 30 corresponds to the fourth subset and the second subset of the amplifier nodes 30 corresponds to the third subset,
-- a failure due to a failure of an amplifier node 30 along the optical data transmission line 20 is detected in case that at least one amplifier node belongs both to the second subset of amplifier nodes 30 and to the fourth subset of amplifier nodes 30.

In Figure 2, the aggregated result of probing acknowledgement messages received from the amplifier nodes 30 located along the optical data transmission line 20 for the situation of a fiber break between the fourth amplifier node 34 and the fifth amplifier node 35 is schematically shown. In this case the first router node 21 receives the information that the amplifiers of a first subset of amplifier nodes, in the example shown including the first, second, third and fourth amplifier node 31, 32, 33, 34, are operational (indicated by the reference sign "op." in two tables of Figure 2), and that the amplifiers of a second subset of amplifier nodes, in the example shown including the fifth, sixth, and seventh amplifier node 35, 36, 37, are not operational (indicated by the reference sign "not op." in two tables of Figure 2). Likewise, the second router node 22 receives the information that the amplifiers of a third subset of amplifier nodes, in the example shown including the first, second, third and fourth amplifier node 31, 32, 33, 34, are not operational, and that the amplifiers of a fourth subset of amplifier nodes, in the example shown including the fifth, sixth, and seventh amplifier node 35, 36, 37, are operational. From this result, it can be concluded that all amplifier nodes are operational or functional and that the failure is highly likely to stem from a fiber break.

In Figure 3, the aggregated result of probing acknowledgement messages received from the amplifier nodes 30 located along the optical data transmission line 20 for the situation of a failure of an amplifier node (here the fifth amplifier node 35) is schematically shown. In this case the first router node 21 receives the information that the amplifiers of a first subset of amplifier nodes, in the example shown including the first, second, third and fourth amplifier node 31, 32, 33, 34, are operational (indicated by the reference sign "op." in two tables of Figure 2), and that the amplifiers of a second subset of amplifier nodes, in the example shown including the fifth, sixth, and seventh amplifier node 35, 36, 37, are not operational (indicated by the reference sign "not op." in two tables of Figure 2). Likewise, the second router node 22 receives the information that the amplifiers of a third subset of amplifier nodes, in the example shown including the first, second, third, fourth and fifth amplifier node 31, 32, 33, 34, 35, are not operational, and that the amplifiers of a fourth subset of amplifier nodes, in the example shown including the sixth, and seventh amplifier node 36, 37, are operational. From this result, it can be concluded that the fifth amplifier node is failed. Optical data transmission line

According to the present invention the optical data transmission network especially is a passive optical transmission network using optical data transmission along two unidirectional optical fiber paths. The optical data transmission network typically has two type of active elements, namely laser transmitters/receivers located at the routers or router nodes, and optical amplifiers located along the path of the optical data transmission lines. Optical splitters (drops/adds) are not active elements. Typically, there are no ROADM (reconfigurable optical add-drop multiplexer), FOADM (Fixed Optical Add/Drop Multiplexer), or Add and Drop Multiplexers. All nodes of the optical data transmission network, especially also the elements along the optical data transmission line 20 (i.e. an optical fiber path) such as the optical amplifiers, have IP addresses, and the failure detection module 25 (and/or the further failure detection module 26) has information about the topology (location in the chain) of these elements or nodes.

The optical signal from the first router node 21 (e.g. an "R2" router denoted as "R2a") will not reach the second router node 22 (e.g. an "R2" router denoted as "R2b") in case that there is an optical fiber cut along the path (i.e. the optical data transmission line 20). According to the present invention, the failure detection module 25 or the further failure detection module 26 starts a "failure localization procedure" once it stops receiving the optical signal. This procedure involves informing the failure detection module 25 of the first router node 21, i.e. of "R2a", or the further failure detection module 26 of the second router node 22, i.e. of "R2b", via an out-of-band signalization that a specific path has a failure. Both the failure detection module 25 and the further failure detection module 26 probe (by means of the probing request messages) the active elements along the optical fiber path (i.e. the amplifier nodes 30) to check which is the last active element that responds to the probe (by means of the probing acknowledgement messages). The information of this checking is sent to the failure localization module 25 and/or to the further failure detection module 26. It is then possible to locate the failure by identifying the last of the amplifier nodes 30 detected by the failure detection module 25, and the last of the amplifier nodes 30 detected by the further failure localization module 26.

## Claims

1. Method for an enhanced failure localization in an optical data transmission network (100), wherein the optical data transmission network (100) comprises at least a first router node (21) and a second router node (22), wherein the optical data transmission network (100) further comprises at least one optical data transmission line (20) connecting the first router node (21) with the second router node (22) providing optical data transmission using a wavelength division multiplex (WDM) scheme or a dense wavelength division multiplex (DWDM) scheme, wherein the optical data transmission network (100) comprises a multitude of amplifier nodes (30) arranged in series along the optical data transmission line (20) between the first router node (21) and the second router node (22), wherein the optical data transmission network (100) comprises at least one failure localization module (25), **characterized in that** the method comprises the following steps:
-- in a first step, at least in case of a failure of the optical data transmission line (20) detected between the first router node (21) and the second router node (22), first probing request messages are sent in the direction from the first router node (21) to the multitude of amplifier nodes (30) and second probing request messages are sent in the direction from the second router node (22) to the multitude of amplifier nodes (30),
-- in a second step, subsequent to the first step, the first router node (21) receives first probing acknowledgement messages from at least part of the multitude of amplifier nodes (30) and the second router node (22) receives second probing acknowledgement messages from at least part of the multitude of amplifier nodes (30),
-- in a third step, subsequent to the second step, the content of the first and second probing acknowledgement messages received is compared and it is concluded where along the optical data transmission line (20) the failure is located and whether the failure of the optical data transmission line (20) is due to a break of the optical data transmission line (20) or due to a failure of an amplifier node (30) along the optical data transmission line (20), wherein
in case the first router node (21) comprises the at least one failure localization module (25), the first and/or second probing acknowledgement messages are received by the localization module (25) or
wherein in case the second router node (22) comprises a further failure localization module (26), the first probing acknowledgement messages are received by the failure localization module (25) and the second probing acknowledgement messages are received by the further failure localization module (26).

2. Method according to claim 1, wherein the second probing acknowledgement messages are transmitted to the failure localization module (25) by means of using a data communication line (40) connecting, at least indirectly, the second router node (22) with the first router node (21) such that the optical data transmission line (20) is bypassed by the data communication line (40).

3. Method according to one of the preceding claims, wherein - in a fourth step subsequent to the second step and preceding the third step - data transmission related to a failure of the optical data transmission line (20) between the first router node (21) and the second router node (22) is conducted between the failure localization module (25) and the further failure localization module (26) using the data communication line (40) connecting, at least indirectly, the second router node (22) with the first router node (21).

4. Method according to one of the preceding claims, wherein the wavelength division multiplex scheme or dense wavelength division multiplex scheme used on the optical data transmission line (20) makes use of a plurality of different optical data transmission frequencies, wherein at least one of these optical data transmission frequencies corresponds to a signaling channel of the optical data transmission line (20), wherein - between the first and/or second router nodes (21, 22) on the one hand and the amplifier nodes (30) of the optical data transmission line (20) on the other hand - the probing request messages and/or the probing acknowledgement messages are transmitted on the signaling channel of the optical data transmission line (20).

5. Method according to one of the preceding claims, wherein - in order to compare the content of the first and second probing acknowledgement messages - dependent on the first probing acknowledgement messages, a first subset of the amplifier nodes (30) of the optical data transmission line (20) are reported to be operational and a second subset of the amplifier nodes (30) of the optical data transmission line (20) are reported not to be operational, and
dependent on the second probing acknowledgement messages, a third subset of the amplifier nodes (30) of the optical data transmission line (20) are reported to be operational and a fourth subset of the amplifier nodes (30) of the optical data transmission line (20) are reported not to be operational,
wherein a failure of the optical data transmission line (20) due to a break of the optical data transmission line (20) is detected in case that the first subset of the amplifier nodes (30) corresponds to the fourth subset and the second subset of the amplifier nodes (30) corresponds to the third subset,
wherein a failure of the optical data transmission line (20) due to a failure of an amplifier node (30) along the optical data transmission line (20) is detected in case that at least one amplifier node both belongs to the second subset of amplifier nodes (30) and to the fourth subset of amplifier nodes (30).

6. Method according to one of the preceding claims wherein the first probing request messages and the second probing request messages are sent repeatedly - also without any failure of the optical data transmission line (20) detected between the first router node (21) and the second router node (22).

7. Optical data transmission network (100), adapted for an enhanced failure localization within the optical data transmission network (100), wherein the optical data transmission network (100) comprises at least a first router node (21) and a second router node (22), wherein the optical data transmission network (100) further comprises at least one optical data transmission line (20) connecting the first router node (21) with the second router node (22) providing optical data transmission using a wavelength division multiplex (WDM) scheme or a dense wavelength division multiplex (DWDM) scheme, wherein the optical data transmission network (100) comprises a multitude of amplifier nodes (30) arranged in series along the optical data transmission line (20) between the first router node (21) and the second router node (22), wherein the optical data transmission network (100) comprises at least one failure localization module (25), **characterized in that** the optical data transmission network (100) is configured such that - at least in case of a failure of the optical data transmission line (20) detected between the first router node (21) and the second router node (22) - first probing request messages are sent in the direction from the first router node (21) to the multitude of amplifier nodes (30) and second probing request messages are sent in the direction from the second router node (22) to the multitude of amplifier nodes (30), wherein the optical data transmission network (100) is furthermore configured such that the first router node (21) receives first probing acknowledgement messages from at least part of the multitude of amplifier nodes (30) and the second router node (22) receives second probing acknowledgement messages from at least part of the multitude of amplifier nodes (30), wherein the optical data transmission network (100) is furthermore configured such that the content of the first and second probing acknowledgement messages received is compared and it is concluded where along the optical data transmission line (20) the failure is located and whether the failure of the optical data transmission line (20) is due to a break of the optical data transmission line (20) or due to a failure of an amplifier node (30) along the optical data transmission line (20), wherein the optical data transmission network (100) is configured such that
-- either the first router node (21) comprises the failure localization module (25), the first and/or second probing acknowledgement messages being received by the localization module (25),
-- or the first router node (21) comprises the failure localization module (25), the second router node (22) comprises a further failure localization module (26), the first probing acknowledgement messages being received by the failure localization module (25) and the second probing acknowledgement messages being received by the further failure localization module (26).

8. Optical data transmission network (100) according to claim 7, wherein the optical data transmission network (100) comprises a data communication line (40), the data communication line (40) connecting, at least indirectly, the second router node (22) with the first router node (21) such that the optical data transmission line (20) is bypassed by the data communication line (40), and adapted such that the first and/or second probing acknowledgement messages or their content are transmitted to the failure localization module (25) by means of using the data communication line (40).

9. Program product comprising a program which comprises a program code readable by and executable on network components of an optical data transmission network (100), the network components comprising at least two router nodes (21, 22), wherein the execution of the program causes the at least two router nodes (21, 22) to perform a method according to one of claims 1 to 6.

## Patentansprüche

1. Verfahren für eine verbesserte Störungslokalisierung in einem optischem Datenübertragungsnetz (100), wobei das optische Datenübertragungsnetz (100) mindestens einen ersten Routerknoten (21) und einen zweiten Routerknoten (22) umfasst, wobei das optische Datenübertragungsnetz (100) des Weiteren mindestens eine optische Datenübertragungsleitung (20) umfasst, die den ersten Routerknoten (21) mit dem zweiten Routerknoten (22) verbindet und eine optische Datenübertragung unter Verwendung eines Wellenlängenmultiplex (WDM)-Regimes oder eines dichten Wellenlängenmultiplex (DWDM)-Regimes ermöglicht, wobei das optische Datenübertragungsnetz (100) eine Vielzahl von Verstärkerknoten (30) umfasst, die in Reihe entlang der optischen Datenübertragungsleitung (20) zwischen dem ersten Routerknoten (21) und dem zweiten Routerknoten (22) angeordnet sind, wobei das optische Datenübertragungsnetz (100) mindestens ein Störungslokalisierungsmodul (25) umfasst, **dadurch gekennzeichnet, dass** das Verfahren die folgenden Schritte umfasst:
- in einem ersten Schritt, mindestens für den Fall, dass eine Störung der optischen Datenübertragungsleitung (20) zwischen dem ersten Routerknoten (21) und dem zweiten Routerknoten (22) detektiert wird, werden erste Sondierungsanforderungsmeldungen in der Richtung von dem ersten Routerknoten (21) zu der Vielzahl von Verstärkerknoten (30) gesendet, und zweite Sondierungsanforderungsmeldungen werden in der Richtung von dem zweiten Routerknoten (22) zu der Vielzahl von Verstärkerknoten (30) gesendet,
- in einem zweiten Schritt, der auf den ersten Schritt folgt, empfängt der erste Routerknoten (21) erste Sondierungsbestätigungsmeldungen von mindestens einem Teil der Vielzahl von Verstärkerknoten (30), und der zweite Routerknoten (22) empfängt zweite Sondierungsbestätigungsmeldungen von mindestens einem Teil der Vielzahl von Verstärkerknoten (30),
- in einem dritten Schritt, der auf den zweiten Schritt folgt, werden die Inhalte der empfangenen ersten und zweiten Sondierungsbestätigungsmeldungen verglichen, und es wird geschlussfolgert, wo entlang der optischen Datenübertragungsleitung (20) sich die Störung befindet und ob die Störung der optischen Datenübertragungsleitung (20) auf einen Bruch der optischen Datenübertragungsleitung (20) oder auf eine Störung eines Verstärkerknotens (30) entlang der optischen Datenübertragungsleitung (20) zurückzuführen ist, wobei
für den Fall, dass der erste Routerknoten (21) das mindestens eine Störungslokalisierungsmodul (25) umfasst, die ersten und/oder zweiten Sondierungsbestätigungsmeldungen durch das Lokalisierungsmodul (25) empfangen werden, oder
wobei für den Fall, dass der zweite Routerknoten (22) ein weiteres Störungslokalisierungsmodul (26) umfasst, die ersten Sondierungsbestätigungsmeldungen durch das Störungslokalisierungsmodul (25) empfangen werden und die zweiten Sondierungsbestätigungsmeldungen durch das weitere Störungslokalisierungsmodul (26) empfangen werden.

2. Verfahren nach Anspruch 1, wobei die zweiten Sondierungsbestätigungsmeldungen an das Störungslokalisierungsmodul (25) mittels einer Datenkommunikationsleitung (40) gesendet werden, die, mindestens indirekt, den zweiten Routerknoten (22) mit dem ersten Routerknoten (21) verbindet, so dass die optische Datenübertragungsleitung (20) durch die Datenkommunikationsleitung (40) umgangen wird.

3. Verfahren nach einem der vorangehenden Ansprüche, wobei in einem vierten Schritt, der auf den zweiten Schritt folgt und dem dritten Schritt vorausgeht, eine Datenübertragung bezüglich einer Störung der optischen Datenübertragungsleitung (20) zwischen dem ersten Routerknoten (21) und dem zweiten Routerknoten (22) zwischen dem Störungslokalisierungsmodul (25) und dem weiteren Störungslokalisierungsmodul (26) unter Verwendung der Datenkommunikationsleitung (40) ausgeführt wird, die, mindestens indirekt, den zweiten Routerknoten (22) mit dem ersten Routerknoten (21) verbindet.

4. Verfahren nach einem der vorangehenden Ansprüche, wobei das Wellenlängenmultiplex-Regime oder das dichte Wellenlängenmultiplex-Regime, die in der optischen Datenübertragungsleitung (20) verwendet werden, mehrere verschiedene optische Datenübertragungsfrequenzen nutzt, wobei mindestens eine dieser optischen Datenübertragungsfrequenzen einem Zeichengabekanal der optischen Datenübertragungsleitung (20) entspricht, wobei
- zwischen den ersten und/oder zweiten Routerknoten (21, 22) einerseits und den Verstärkerknoten (30) der optischen Datenübertragungsleitung (20) andererseits - die Sondierungsanforderungsmeldungen und/oder die Sondierungsbestätigungsmeldungen auf dem Zeichengabekanal der optischen Datenübertragungsleitung (20) gesendet werden.

5. Verfahren nach einem der vorangehenden Ansprüche, wobei, um die Inhalte der ersten und zweiten Sondierungsbestätigungsmeldungen zu vergleichen, in Abhängigkeit von den ersten Sondierungsbestätigungsmeldungen, eine erste Teilmenge der Verstärkerknoten (30) der optischen Datenübertragungsleitung (20) als betriebstüchtig gemeldet wird und eine zweite Teilmenge der Verstärkerknoten (30) der optischen Datenübertragungsleitung (20) als nicht betriebstüchtig gemeldet wird, und
in Abhängigkeit von den zweiten Sondierungsbestätigungsmeldungen, eine dritte Teilmenge der Verstärkerknoten (30) der optischen Datenübertragungsleitung (20) als betriebstüchtig gemeldet wird und eine vierte Teilmenge der Verstärkerknoten (30) der optischen Datenübertragungsleitung (20) als nicht betriebstüchtig gemeldet wird,
wobei eine Störung der optischen Datenübertragungsleitung (20) aufgrund eines Bruches der optischen Datenübertragungsleitung (20) für den Fall detektiert wird, dass die erste Teilmenge der Verstärkerknoten (30) der vierten Teilmenge entspricht und die zweite Teilmenge der Verstärkerknoten (30) der dritten Teilmenge entspricht,
wobei eine Störung der optischen Datenübertragungsleitung (20) aufgrund einer Störung eines Verstärkerknotens (30) entlang der optischen Datenübertragungsleitung (20) für den Fall detektiert wird, dass mindestens ein Verstärkerknoten sowohl zur zweiten Teilmenge von Verstärkerknoten (30) als auch zur vierten Teilmenge von Verstärkerknoten (30) gehört.

6. Verfahren nach einem der vorangehenden Ansprüche, wobei die ersten Sondierungsanforderungsmeldungen und die zweiten Sondierungsanforderungsmeldungen wiederholt gesendet werden, auch wenn keine Störung der optischen Datenübertragungsleitung (20) zwischen dem ersten Routerknoten (21) und dem zweiten Routerknoten (22) detektiert wird.

7. Optisches Datenübertragungsnetz (100), das für eine verbesserte Störungslokalisierung innerhalb des optischen Datenübertragungsnetzes (100) ausgelegt ist, wobei das optische Datenübertragungsnetz (100) mindestens einen ersten Routerknoten (21) und einen zweiten Routerknoten (22) umfasst, wobei das optische Datenübertragungsnetz (100) des Weiteren mindestens eine optische Datenübertragungsleitung (20) umfasst, die den ersten Routerknoten (21) mit dem zweiten Routerknoten (22) verbindet und eine optische Datenübertragung unter Verwendung eines Wellenlängenmultiplex (WDM)-Regimes oder eines dichten Wellenlängenmultiplex (DWDM)-Regimes ermöglicht, wobei das optische Datenübertragungsnetz (100) eine Vielzahl von Verstärkerknoten (30) umfasst, die in Reihe entlang der optischen Datenübertragungsleitung (20) zwischen dem ersten Routerknoten (21) und dem zweiten Routerknoten (22) angeordnet sind, wobei das optische Datenübertragungsnetz (100) mindestens ein Störungslokalisierungsmodul (25) umfasst, **dadurch gekennzeichnet, dass** das optische Datenübertragungsnetz (100) so ausgebildet ist, dass mindestens für den Fall, dass eine Störung der optischen Datenübertragungsleitung (20) zwischen dem ersten Routerknoten (21) und dem zweiten Routerknoten (22) detektiert wird, erste Sondierungsanforderungsmeldungen in der Richtung von dem ersten Routerknoten (21) zu der Vielzahl von Verstärkerknoten (30) gesendet werden und zweite Sondierungsanforderungsmeldungen in der Richtung von dem zweiten Routerknoten (22) zu der Vielzahl von Verstärkerknoten (30) gesendet werden, wobei das optische Datenübertragungsnetz (100) des Weiteren so ausgebildet ist, dass der erste Routerknoten (21) erste Sondierungsbestätigungsmeldungen von mindestens einem Teil der Vielzahl von Verstärkerknoten (30) empfängt und der zweite Routerknoten (22) zweite Sondierungsbestätigungsmeldungen von mindestens einem Teil der Vielzahl von Verstärkerknoten (30) empfängt, wobei das optische Datenübertragungsnetz (100) des Weiteren so ausgebildet ist, dass die Inhalte der empfangenen ersten und zweiten Sondierungsbestätigungsmeldungen verglichen werden und geschlussfolgert wird, wo entlang der optischen Datenübertragungsleitung (20) sich die Störung befindet und ob die Störung der optischen Datenübertragungsleitung (20) auf einen Bruch der optischen Datenübertragungsleitung (20) oder auf eine Störung eines Verstärkerknotens (30) entlang der optischen Datenübertragungsleitung (20) zurückzuführen ist, wobei das optische Datenübertragungsnetz (100) so ausgebildet ist, dass
- entweder der erste Routerknoten (21) das Störungslokalisierungsmodul (25) umfasst, wobei die ersten und/oder zweiten Sondierungsbestätigungsmeldungen durch das Lokalisierungsmodul (25) empfangen werden,
- oder der erste Routerknoten (21) das Störungslokalisierungsmodul (25) umfasst und der zweite Routerknoten (22) ein weiteres Störungslokalisierungsmodul (26) umfasst, wobei die ersten Sondierungsbestätigungsmeldungen durch das Störungslokalisierungsmodul (25) empfangen werden und die zweiten Sondierungsbestätigungsmeldungen durch das weitere Störungslokalisierungsmodul (26) empfangen werden.

8. Optisches Datenübertragungsnetz (100) nach Anspruch 7, wobei das optische Datenübertragungsnetz (100) eine Datenkommunikationsleitung (40) umfasst, wobei die Datenkommunikationsleitung (40), mindestens indirekt, den zweiten Routerknoten (22) mit dem ersten Routerknoten (21) verbindet, so dass die optische Datenübertragungsleitung (20) durch die Datenkommunikationsleitung (40) umgangen wird, und so ausgelegt ist, dass die ersten und/oder zweiten Sondierungsbestätigungsmeldungen oder ihre Inhalte an das Störungslokalisierungsmodul (25) mittels der Datenkommunikationsleitung (40) gesendet werden.

9. Programmprodukt, das ein Programm umfasst, das einen Programmcode umfasst, der durch Netzwerkkomponenten eines optischen Datenübertragungsnetzes (100) gelesen und in ihnen ausgeführt werden kann, wobei die Netzwerkkomponenten mindestens zwei Routerknoten (21, 22) umfassen, wobei die Ausführung des Programms die mindestens zwei Routerknoten (21, 22) veranlasst, ein Verfahren nach einem der Ansprüche 1 bis 6 auszuführen.

## Revendications

1. Procédé de localisation de panne améliorée dans un réseau de transmission de données optique (100), dans lequel le réseau de transmission de données optique (100) comprend au moins un premier noeud routeur (21) et un second noeud routeur (22), dans lequel le réseau de transmission de données optique (100) comprend en outre au moins une ligne de transmission de données optique (20) reliant le premier noeud de routeur (21) au second noeud routeur (22) fournissant une transmission de données optique en utilisant un schéma de multiplexage par répartition en longueur d'onde (WDM) ou un schéma de multiplexage par répartition dense en longueur (DWDM), dans lequel le réseau de transmission de données optique (100) comprend une multitude de noeuds amplificateurs (30) agencés en série le long de la ligne de transmission de données optique (20) entre le premier noeud routeur (21) et le second noeud routeur (22), dans lequel le réseau de transmission de données optique (100) comprend au moins un module de localisation de panne (25), **caractérisé en ce que** le procédé comprend les étapes suivantes :
- dans une première étape, au moins dans le cas où une panne de la ligne de transmission de données optique (20) est détectée entre le premier noeud routeur (21) et le second noeud routeur (22), de premiers messages de demande de sondage sont envoyés dans la direction allant du premier noeud routeur (21) vers la multitude de noeuds amplificateurs (30), et de seconds messages de demande de sondage sont envoyés dans la direction allant du second noeud routeur (22) vers la multitude de noeuds amplificateurs (30),
- dans une deuxième étape, après la première étape, le premier noeud routeur (21) reçoit de premiers messages d'accusé de réception de sondage à partir d'au moins une partie de la multitude de noeuds amplificateurs (30) et le second noeud routeur (22) reçoit de seconds messages d'accusé de réception de sondage à partir d'au moins une partie de la multitude de noeuds amplificateurs (30),
- dans une troisième étape, après la deuxième étape, le contenu des premier et second messages d'accusé de réception de sondage reçus est comparé et on déduit l'endroit le long de la ligne de transmission de données optique (20) où se situe la panne et si la panne de la ligne de transmission de données optique (20) est due à une rupture de la ligne de transmission de données optique (20) ou due à une panne d'un noeud amplificateur (30) le long de la ligne de transmission de données optique (20), dans lequel
dans le cas où le premier noeud routeur (21) comprend ledit au moins un module de localisation de panne (25), les premiers et/ou les seconds messages d'accusé de réception de sondage sont reçus par le module de localisation (25) ou
dans lequel, dans le cas où le second noeud routeur (22) comprend un autre module de localisation de panne (26), les premiers messages d'accusé de réception de sondage sont reçus par le module de localisation de panne (25) et les seconds messages d'accusé de réception de sondage sont reçus par l'autre module de localisation de panne (26).

2. Procédé selon la revendication 1, dans lequel les seconds messages d'accusé de réception de sondage sont transmis au module de localisation de panne (25) au moyen d'une ligne de communication de données (40) reliant, au moins indirectement, le second noeud routeur (22) au premier noeud routeur (21), de telle sorte que la ligne de transmission de données optique (20) est contournée par la ligne de communication de données (40).

3. Procédé selon l'une quelconque des revendications précédentes, dans lequel - dans une quatrième étape après la deuxième étape et précédant la troisième étape - une transmission de données liée à une panne de la ligne de transmission de données optique (20) entre le premier noeud routeur (21) et le second noeud routeur (22) est effectuée entre le module de localisation de panne (25) et l'autre module de localisation de panne (26) en utilisant la ligne de communication de données (40) reliant, au moins indirectement, le second noeud routeur (22) au premier noeud routeur (21).

4. Procédé selon l'une quelconque des revendications précédentes, dans lequel le schéma de multiplexage par répartition en longueur d'onde ou le schéma de multiplexage par répartition dense en longueur d'onde utilisé sur la ligne de transmission de données optique (20) utilise une pluralité de fréquences de transmission de données optique différentes, dans lequel au moins l'une de ces fréquences de transmission de données optique correspondent à un canal de signalisation de la ligne de transmission de données optique (20), dans lequel - entre les premier et/ou second noeuds routeurs (21, 22), d'une part, et les noeuds amplificateurs (30) de la ligne de transmission de données optique (20), d'autre part - les messages de demande de sondage et/ou les messages d'accusé de réception de sondage sont transmis sur le canal de signalisation de la ligne de transmission de données optique (20).

5. Procédé selon l'une quelconque des revendications précédentes, dans lequel - pour comparer le contenu des premiers et seconds messages d'accusé de réception de sondage - en fonction des premiers messages d'accusé de réception de sondage, un premier sous-ensemble des noeuds amplificateurs (30) de la ligne de transmission de données optique (20) sont signalés comme étant opérationnels et un second sous-ensemble des noeuds amplificateurs (30) de la ligne de transmission de données optique (20) sont signalés comme n'étant pas opérationnels, et
en fonction des seconds messages d'accusé de réception de sondage, un troisième sous-ensemble des noeuds amplificateurs (30) de la ligne de transmission de données optique (20) sont signalés comme étant opérationnels et un quatrième sous-ensemble des noeuds amplificateurs (30) de la ligne de transmission optique de données (20) sont signalés comme n'étant pas opérationnels,
dans lequel une panne de la ligne de transmission de données optique (20) due à une rupture de la ligne de transmission de données optique (20) est détectée dans le cas où le premier sous-ensemble des noeuds amplificateurs (30) correspond au quatrième sous-ensemble et le second sous-ensemble des noeuds amplificateurs (30) correspond au troisième sous-ensemble,
dans lequel une panne de la ligne de transmission de données optique (20) due à une panne d'un noeud amplificateur (30) le long de la ligne de transmission de données optique (20) est détectée dans le cas où au moins un noeud amplificateur appartient à la fois au second sous-ensemble de noeuds amplificateurs (30) et au quatrième sous-ensemble de noeuds amplificateurs (30).

6. Procédé selon l'une quelconque des revendications précédentes, dans lequel les premiers messages de demande de sondage et les seconds messages de demande de sondage sont envoyés de façon répétée - également sans aucune panne de la ligne de transmission de données optique (20) détectée entre le premier noeud routeur (21) et le second noeud routeur (22).

7. Réseau de transmission de données optiques (100), conçu pour une localisation de panne améliorée dans le réseau de transmission de données optique (100), dans lequel le réseau de transmission de données optique (100) comprend au moins un premier noeud routeur (21) et un second noeud routeur (22), dans lequel le réseau de transmission de données optique (100) comprend en outre au moins une ligne de transmission de données optique (20) reliant le premier noeud routeur (21) au second noeud routeur (22) fournissant une transmission de données optique en utilisant un schéma de multiplexage par répartition en longueur d'onde (WDM) ou un schéma de multiplexage par répartition dense en longueur d'onde (DWDM), dans lequel le réseau de transmission de données optique (100) comprend une multitude de noeuds amplificateurs (30) agencés en série le long de la ligne de transmission de données optique (20) entre le premier noeud routeur (21) et le second noeud routeur (22), dans lequel le réseau de transmission de données optique (100) comprend au moins un module de localisation de panne (25), **caractérisé en ce que** le réseau de transmission de données optique (100) est configuré de sorte que - au moins dans le cas où une panne de la ligne de transmission de données optique (20) est détectée entre le premier noeud routeur (21) et le second noeud routeur (22) - de premiers messages de demande de sondage sont envoyés dans la direction allant du premier noeud routeur (21) vers la multitude de noeuds amplificateurs (30) et de seconds messages de demande de sondage sont envoyés dans la direction du second noeud routeur (22) vers la multitude de noeuds amplificateurs (30), dans lequel le réseau de transmission de données optique (100) est en outre configuré de telle sorte que le premier noeud routeur (21) reçoit les premiers messages d'accusé de réception de sondage à partir d'au moins une partie de la multitude de noeuds amplificateurs (30) et le second noeud routeur (22) reçoit de seconds messages d'accusé de réception de sondage à partir d'au moins une partie de la multitude de noeuds amplificateurs (30), dans lequel le réseau de transmission de données optique (100) est en outre configuré de telle sorte que le contenu des premiers et seconds messages d'accusé de réception de sondage reçus est comparé et on déduit l'endroit le long de la ligne de transmission de données optique (20) où se situe la panne et si la panne de la ligne de transmission de données optique (20) est due à une rupture de la ligne de transmission de données optique (20) ou à due à une panne d'un noeud amplificateur (30) le long de la ligne de transmission de données optique (20), dans lequel le réseau de transmission de données optique (100) est configuré de sorte que
- soit le premier noeud routeur (21) comprend le module de localisation de panne (25), les premiers et/ou les seconds messages d'accusé de réception de sondage étant reçus par le module de localisation (25),
- soit le premier noeud routeur (21) comprend le module de localisation de panne (25), le second noeud routeur (22) comprend un autre module de localisation de panne (26), les premiers messages d'accusé de réception de sondage étant reçus par le module de localisation de panne (25) et les seconds messages d'accusé de réception de sondage étant reçus par l'autre module de localisation de panne (26).

8. Réseau de transmission de données optiques (100) selon la revendication 7, dans lequel le réseau de transmission de données optique (100) comprend une ligne de communication de données (40), la ligne de communication de données (40) reliant, au moins indirectement, le second noeud routeur (22) au premier noeud routeur (21), de sorte que la ligne de transmission de données optique (20) est contournée par la ligne de communication de données (40), et conçu de sorte que les premiers et/ou les seconds messages d'accusé de réception de sondage ou leur contenu sont transmis au module de localisation de panne (25) au moyen de l'utilisation de la ligne de communication de données (40).

9. Produit de programme comprenant un programme qui comprend un code de programme lisible par des composants de réseau d'un réseau de transmission de données optique (100) et exécutable sur ceux-ci, les composants de réseau comprenant au moins deux noeuds routeurs (21, 22), dans lequel l'exécution du programme amène lesdits au moins deux noeuds routeurs (21, 22) à effectuer un procédé selon l'une des revendications 1 à 6.
